# EUROPEAN PATENT APPLICATION

(11) **EP 1 790 534 A2**
(43) Date of publication of application: **30.05.2007**
(21) Application number: 06255901.8
(22) Date of filing: 17.11.2006
(51) Int. Cl.: B60R 21/06

(54) **Safety apparatus**

(30) Priority: 19.11.2005 GB 0523590
(71) Applicant: Bison Safety Systems, Callendar Road Falkirk FK1 1XR (GB)
(72) Inventor: Hastie, Graeme, Bison Safety Systems, Falkirk FK1 1XR (GB); Williamson, Angus, Bison Safety Systems, Falkirk FK1 1XR (GB); Massey, Christopher, Bradley, Ashbourne DE6 1LP (GB)
(74) Representative: Docherty, Andrew John

(57) **Abstract**

A fall arrest assembly 12 comprises a catching assembly positioned around the edge of a platform 10. An apparatus 16 for securing the catching assembly to the platform 10 comprises a body adapted to engage the platform 10 and a mounting arrangement 32 for supporting the catching assembly. The apparatus 16 further comprises a clamping mechanism 44 adapted to releasably secure the body against the platform 10.

## Description

### FIELD OF THE INVENTION

The present invention relates to a safety apparatus and system, and in particular a fall arrest safety apparatus and system for use with a platform, particularly a load platform of a vehicle.

### BACKGROUND TO THE INVENTION

Fall protection and arrest systems are conventionally used at elevated locations where personnel are required to operate and where there is significant risk of a fall. However, such safety systems have primarily been used in fixed locations where a permanent or semi-permanent system may be established and utilised. For example, such systems may be used on construction sites, on buildings such as in the region of a roof or the like. However, efforts are now being made to provide safety systems which may be used in other environments where personnel are exposed to the possibility of falling from height. For example, when loading or unloading a vehicle using a crane or other lifting device, it is sometimes unavoidable that a person must climb upon a load platform of the vehicle, and even the load itself, to guide the crane operator and/or to attach the load to a suitable lifting hook. In many circumstances load platforms of delivery vehicles are over 1.5 metres high, and as such may result in injury to personnel should a fall from such a platform occur.

It is known in the art to provide a safety line system which incorporates a wire or rope extending around the perimeter of the platform, such that personnel may secure themselves to the safety line via a suitable harness and lanyard, for example. However, such a safety line system provides an obstacle to objects which are being loaded or unloaded from the platform, and as such are in many cases deemed inappropriate.

It is also known to provide a dedicated loading bay where a vehicle may be reversed or otherwise parked in a defined area such that the load platform is surrounded by nets for catching any personnel who may fall from the platform. However, such a system is generally considered to be unsatisfactory in that the vehicle must be loaded and unloaded at a fixed location, which may be located away from the required end position of the load, necessitating further handling.

It is also known in the art to provide a safety apparatus which may temporarily be secured to the load platform of a vehicle when there is a possible risk of an operator falling therefrom. One such system is disclosed in UK patent application publication no. GB 2,377,914 in which a number of brackets are secured along the edge region of the platform, wherein each bracket supports a generally upwardly extending post, and wherein a net is supported between each post to provide a fall arrest barrier. In the arrangement disclosed in GB 2,377,914, each bracket is secured to the platform by a first webbing strap which hooks to the underside of the load platform, and a second webbing strap which extends across the upper deck surface of the load platform and engages an opposing bracket.

### SUMMARY OF THE INVENTION

According to a first aspect of the present invention, there is provided an apparatus for securing to a platform, said apparatus comprising:
a body adapted to engage a platform and comprising a mounting arrangement for supporting a catching assembly; and
a clamping mechanism adapted to releasably secure the body against the platform.

Advantageously, in use, the apparatus may be releasably secured to the platform by the clamping means and utilised to support a catching assembly to provide a safety fall arrest barrier for arresting a fall of a person or object from the platform.

In a preferred embodiment the body is adapted to engage an edge region of a platform such that the catching assembly may be positioned at least partially around the perimeter of said platform.

Preferably, the apparatus is adapted to be secured to a load platform of a vehicle, and more preferably to a flat-bed platform of a vehicle, such as a flat-bed trailer.

Preferably, the body comprises at least one platform engaging portion adapted to engage a side surface of a platform. Advantageously, the clamping mechanism may be adapted to clamp the at least one platform engaging portion against the platform. In one embodiment the body may comprise first and second platform engaging portions, wherein the first and second portions may be aligned substantially perpendicular relative to each other. In this arrangement the first platform engaging portion may be adapted to engage a substantially vertical surface of a platform, and the second platform engaging portion may be adapted to engage a horizontal surface of a platform. The platform engaging portions may be integrally formed with each other, or one or more engaging portions may be separately formed and subsequently secured to each other, for example by welding, bolting, screwing, riveting or the like.

The first platform engaging portion may comprise at least one substantially planar member. In one embodiment, a face surface of the planar member may be adapted to engage the platform. In an alternative embodiment, an edge surface of the planar member may be adapted to engage the platform. The first platform engaging portion may comprise a pair of substantially planar members aligned parallel to each other, wherein an edge surface of each member is adapted to engage the platform. The edge surface of each member may be adapted to directly engage the platform. Alternatively, the edge surface of one or both members may be adapted to indirectly engage the platform, for example via a plate which may extend between the members. A portion of the clamping mechanism may be adapted to engage at least one planar member of the first platform engaging portion.

The second platform engaging portion may comprise at least one substantially planar member. The at least one planar member may be integrally formed with a corresponding planar member of the first platform engaging portion. Alternatively, the at least one planar member may be separately formed and subsequently secured to a corresponding planar member of the first platform engaging portion. In one embodiment, a face surface of the planar member may be adapted to engage the platform. In an alternative embodiment, an edge surface of the planar member may be adapted to engage the platform. The second platform engaging portion may comprise a pair of substantially planar members aligned parallel to each other, wherein an edge surface of each member is adapted to engage the platform. The edge surface of each member may be adapted to directly engage the platform. Alternatively, the edge surface of one or both members may be adapted to indirectly engage the platform, for example via a plate which may extend between the members. A portion of the clamping mechanism may be adapted to engage at least one planar member of the second platform engaging portion.

Advantageously, the apparatus is adapted to be secured to a platform comprising an elongate edge support member, wherein the body is adapted to engage said elongate member. In this arrangement the clamping mechanism is adapted to engage a surface of the elongate member.

In one embodiment, the clamping mechanism may be separable from the body or alternatively may be secured to the body.

Preferably, the clamping mechanism comprises a force mechanism adapted to apply a clamping force between the body and a platform to which the apparatus of the present invention is to be secured. The force mechanism is adapted to apply a clamping force against the body by a screw arrangement. Alternatively, the force mechanism may comprise a lever arrangement, preferably in combination with a ratchet for reliably retaining a set clamping force. Advantageously, the force mechanism may be of a quick-release type, permitting rapid application and removal of a clamping force.

In one embodiment, the clamping mechanism may comprise first and second clamping arms supporting respective pressure plates adapted to engage a respective one of the body and a platform, wherein the force mechanism is adapted to apply a clamping force between said pressure plates. Advantageously also, the clamping mechanism may comprise a quick-adjust arrangement permitting the separation between the first and second clamping arms to be readily adjusted. For example, the first clamping arm may be provided on a fixed frame, upon which fixed frame the second arm may be slidably mounted.

In one embodiment of the present invention, the clamping mechanism may be secured to the body. For example, one of the first and second clamping arms may be secured to the body, and preferably pivotally secured to the body to permit the clamping mechanism to be readily pivoted into and out of position when in use. In this arrangement, a pressure plate may be defined at a connection between the clamping arm and the body.

The clamping mechanism may comprise a clamping arm pivotally connected to the body, wherein the clamping arm comprises a platform engaging portion adapted to engage a surface of the platform. The force mechanism may extend between the clamping arm and the body, wherein the force mechanism is adapted to adjust the relative pivotal movement of the arm and body to thus adjust the clamping force established therebetween when in use.

Preferably, the body comprises a pair of substantially planar members aligned parallel to each other, wherein the force mechanism is adapted to engage both members. For example, an extension member may extend between each member, wherein the force mechanism is adapted to be coupled to the extension member. The substantially planar members may form part of one of the first and second platform engaging portions.

In an alternative embodiment, the clamping mechanism may be secured to a platform to which the body is to be secured.

Advantageously, more than one clamping mechanism may be provided.

Preferably, the mounting arrangement is adapted to receive and mount a support post of a catching assembly, wherein the support post supports a sheet-form catching member, such as a netting or the like. The mounting arrangement may comprise a sleeve into which at least a lower end of a support post is inserted when in use. Alternatively, the mounting arrangement may comprise a mounting bracket upon which a support arm is mounted, preferably pivotally mounted, when in use. In a preferred arrangement, the support post to be mounted on the mounting bracket comprises a spindle extending laterally through one end region thereof, wherein the mounting bracket is adapted to pivotally support said spindle, preferably at either end thereof.

The mounting bracket may be separately formed and subsequently secured to the body, for example by welding or the like. For example, the body may comprise a plate member and the mounting bracket may be secured to said support member. Alternatively, the mounting bracket may be integrally formed with the body. For example, the body may comprise one or more substantially planar members, wherein the mounting bracket is at least partially comprised in said planar members.

The mounting bracket may comprise first and second plates each defining a fulcrum adapted to receive and support an end region of a spindle of a support post. In this arrangement, in use, a lower end of a support post is positioned between the plates. The fulcrum of each plate may be defined by an aperture into which the spindle is located. Alternatively, the fulcrum may comprise a slot.

Preferably, the mounting arrangement comprises abutment means against which a lower end of a support post abuts to limit pivoting motion of a post relative to the body. The abutment means may be a surface of the body. Alternatively, the abutment means comprises an abutment member extending between the first and second plates. In one arrangement the abutment member may be permanently positioned between the first and second plates, for example by welding, riveting or the like. Alternatively, and in a preferred embodiment, the abutment member is releasably positioned between the plates. For example, each plate may define mutually aligned apertures for receiving and supporting the abutment member, which may be in the form of a pin.

Preferably, the abutment means is adjustable to permit the angle at which a support post extends from the body to be adjusted. In a preferred embodiment, each plate of the mounting bracket comprises a plurality of mutually aligned pairs of apertures such that an abutment member may be adjustably mounted between the plates at a required position.

In a preferred embodiment, the apparatus comprises dampening means for dampening the force of a fall onto a supported catching part when the apparatus is in use. The dampening means may comprise spring means positioned between a support post of the catching assembly and the body. The spring means may comprise a compression spring, elastomeric material, gas spring or the like. Preferably, the dampening means comprises a deformable member, more preferably a permanently deformable member, positioned between a support post of the catching assembly and the body. In a preferred embodiment, the deformable member is the abutment member. Accordingly, in the event of a fall, a support post of a catching part will pivot relative to the body and accordingly deform the abutment member to dampen the force of the fall.

Permanent deformation of the abutment member advantageously may assist in quality assurance as any deformation will indicate that a fall has occurred, thus identifying the possible requirement to assess the entire system.

Preferably, the mounting arrangement is located on the first platform engaging portion of the body. Alternatively, the mounting arrangement may be positioned on the second platform engaging portion. Alternatively further, a first mounting arrangement may be located on the first platform engaging portion and a second mounting arrangement may be located on the second platform engaging portion. The first and second mounting arrangements may be adapted to support respective support posts of a catching assembly, wherein the support posts may extend from the body in the same or different directions. Advantageously, where the mounting arrangements are adapted to permit respective support posts to extend in different directions, the body may be utilised at a corner location of the platform.

In embodiments of the present invention, the body may comprise a third platform engaging portion, wherein said third portion may be aligned substantially perpendicular relative to the first and second portions. However, the third platform engaging portion may extend at any suitable angle from the first and second portions. The arrangement of the portions of the body may therefore permit said body to be positioned at a corner of a platform, and subsequently secured thereto by the clamping mechanism.

The clamping mechanism may clamp against any one or all of the first, second and third portions of the body. In one embodiment the body may further comprise at least one elongate member adapted to extend along an edge of a platform, when in use, wherein said elongate member is adapted to be clamped against the platform. The elongate member may, in use, be directly engaged by the clamping mechanism. Alternatively, the elongate member may be engaged by the clamping mechanism via a clamping plate. The clamping plate may comprise a substantially L-shaped plate adapted to be positioned over a portion of the elongate member, preferably towards a free end thereof, such that the clamping mechanism may, in use, clamp the clamping plate against the elongate member, and thus the elongate member against the platform.

Preferably, the apparatus comprises a hook adapted to retain a portion of a catching assembly, such as a sheet-form member, for example a netting. The hook may therefore by used to retain tension across the sheet-form member. In one embodiment, the hook may be provided on the body, and more preferably on the mounting arrangement. Alternatively, or additionally, the hook may be provided on the clamping arrangement.

Advantageously, the apparatus may be adapted to engage a similar apparatus, when in use. For example, the apparatus may be adapted to engage a similar apparatus also located on the platform, and preferably located at on opposite side of the platform. The apparatus may be adapted to engage a similar apparatus via an elongate member, such as a rope, wire, metal strap, webbing strap or the like. Advantageously, the apparatus may comprise or be used in conjunction with a tensioning device for applying tension to the elongate member. The tensioning device may comprise, for example, a turnbuckle and more preferably a ratchet tensioner or the like. This arrangement may assist to retain the apparatus against a platform.

The body may comprise an engagement portion adapted to be engaged by an elongate member to be secured to a similar apparatus.

The apparatus may be adapted to engage a profile on a platform to which the apparatus is to be secured. For example, the apparatus may be adapted to engage lugs, pins, holes or the like provided on the platform. This arrangement may permit the apparatus to be positioned at a predefined location.

According to a second aspect of the present invention, there is provided an apparatus for securing to a platform, said apparatus comprising:
a body adapted to engage the platform and comprising a mounting arrangement;
a clamping mechanism adapted to releasably secure the body against the platform; and
a support post for supporting a catching assembly and adapted to be mounted on the mounting arrangement.

Preferably, the support post comprises attachment means to which the catching assembly may be secured. The attachment means may comprise one or more hooks, toggles, eyelets or the like. In one embodiment, the support post comprises a toggle positioned at a free end thereof. The toggle may be directly secured to the post. Alternatively, the toggle may be secured to an insert adapted to be received within or on the support post, preferably within one end thereof. The insert may be formed of nylon, aluminium, steel or the like, or any other, synthetic, composite, polymeric or metal alloy. Alternatively, the support post may comprise a generally U or Y-shaped portion adapted to support an elongate member or portion of the catching assembly. The elongate portion or member may be held within the U or Y-shaped portion by a pin, for example, such as a linch pin.

Preferably, the catching assembly comprises a sheet-form member, such as a netting or the like. Advantageously, a plurality of apparatuses may be utilised in combination, such that the catching assembly may be supported between respective support posts.

Preferred and optional features defined above with respect to the first aspect may be independently or collectively used in combination with the apparatus according to the second aspect.

According to a third aspect of the present invention there is provided a fall arrest assembly comprising:
at least one body adapted to selectively engage a platform and comprising a mounting arrangement;
a clamping mechanism adapted to releasably secure the body against the platform;
a support post adapted to be mounted on the mounting arrangement; and
a catching assembly supported by the support post.

Preferably, a plurality of bodies are provided and in use are positioned around the edge of a platform such that the fall arrest assembly may provide protection for at least a portion of the perimeter of the platform. In one embodiment, two or more bodies may be secured to each other, for example via webbing or the like.

Preferred and optional features defined above with respect to the first and second aspects may be independently or collectively used in combination with the fall arrest assembly according to the third aspect.

According to a fourth aspect of the present invention, there is provided an apparatus for securing against an edge surface of a platform, said apparatus comprising:
a hook arrangement adapted to engage an elongate member positioned adjacent an edge surface of a platform;
a platform engaging portion adapted to engage an edge surface of a platform; and
a mounting arrangement for supporting a catching assembly.

Advantageously, in use, the apparatus may be located over the elongate member via the hook arrangement such that the platform engaging portion engages an edge surface of an adjacent platform, wherein the apparatus may then be utilised to support a catching assembly to provide a safety fall arrest barrier for arresting a fall of a person or object from the platform.

Advantageously, the hook arrangement is adapted to engage an elongate member secured to an edge surface of a platform. The platform may be in the form of a pallet or the like.

Preferably, the apparatus comprises a base member forming the platform engaging part, and first and second parallel plate members extending substantially perpendicularly from the base member, preferably opposing edges of the base member.

Advantageously, each of the first and second plates defines a slot which together define the hook arrangement.

Preferably, the mounting arrangement is adapted to receive and mount a support post of a catching assembly, wherein the support post supports a sheet-form catching member, such as a netting or the like. The mounting arrangement may comprise a sleeve into which a support post is inserted when in use. Alternatively, the mounting arrangement comprises a mounting bracket upon which a support arm is pivotally mounted, when in use. In a preferred arrangement, the support post to be mounted on the mounting bracket comprises a spindle extending laterally through one end region thereof, wherein the mounting bracket is adapted to pivotally support said spindle, preferably at either end thereof.

Preferably, the first and second plate members define respective mutually aligned apertures adapted to receive an end region of a spindle of a support post. In this arrangement, in use, a lower end of a support post is positioned between the plate members. In a preferred embodiment, at least one and preferably both plate members defines a slot extending from an upper edge thereof and merging with the aperture, such that a spindle of a support post may be readily received within the slots and ultimately pivotally supported by the plate members.

Preferably, the mounting arrangement comprises abutment means against which a lower end of a support post abuts to limit pivoting motion of a post relative to the body. The abutment means may be a surface of the base member. Alternatively, the abutment means may comprise an abutment member extending between the first and second plate members. In one arrangement the abutment member may be permanently positioned between the first and second plate members, for example by welding, riveting or the like. Alternatively, and in a preferred embodiment, the abutment member is releasably positioned between the plate members. For example, each plate member may define mutually aligned apertures for receiving and supporting the abutment member, which may be in the form of a pin.

Preferably, the abutment means is adjustable to permit the angle at which a support post extends from the apparatus. In a preferred embodiment, each plate member comprises a plurality of mutually aligned pairs of apertures such that an abutment member may be mounted between the plate members at a required position.

In a preferred embodiment, the apparatus comprises dampening means for dampening the force of a fall onto a supported catching part when the apparatus is in use. The dampening means may comprise spring means positioned between a support post of the apparatus. The spring means may comprise a compression spring, elastomeric material, gas spring or the like. Preferably, the dampening means comprises a deformable member, more preferably a permanently deformable member, positioned between a support post of the catching assembly and the apparatus. In a preferred embodiment, the deformable member is the abutment member. Accordingly, in the event of a fall, a support post of a catching part will pivot relative to the apparatus and accordingly deform the abutment member to dampen the force of the fall.

According to a fifth aspect of the present invention, there is provided an apparatus for securing against an edge of a platform, said apparatus comprising:
a body defining a hook arrangement adapted to engage an elongate member positioned adjacent an edge surface of a platform, a platform engaging portion adapted to engage an edge surface of a platform, and a mounting arrangement; and
a support post for supporting a catching assembly and adapted to be mounted on the mounting arrangement.

Features defined above in relation to preceding aspects may be applied to the apparatus of this fifth aspect.

Preferably, the support post comprises attachment means to which the catching assembly may be secured. The attachment means may comprise one or more hooks, toggles, eyelets or the like. In one preferred embodiment, the support post comprises a toggle positioned at a free end thereof. The toggle may be directly secured to the post. Alternatively, the toggle may be secured to an insert adapted to be received within or on the support post, preferably within one end thereof. The insert may be formed of nylon, aluminium, steel or the like, or any other, synthetic, composite, polymeric or metal alloy.

Preferably, the catching assembly comprises a sheet-form member, such as a netting or the like. Advantageously, a plurality of apparatuses may be utilised in combination, such that the catching assembly may be supported between respective support posts.

Preferred and optional features defined above with respect to the fourth aspect may be independently or collectively used in combination with the apparatus according to the fifth aspect.

According to a sixth aspect of the present invention there is provided a fall arrest assembly comprising:
at least one body defining a hook arrangement adapted to engage an elongate member positioned adjacent an edge surface of a platform, a platform engaging portion adapted to engage an edge surface of a platform, and a mounting arrangement; and
a support post adapted to be mounted on the mounting arrangement; and
a catching assembly supported by the support post.

Preferably, a plurality of bodies are provided and in use are positioned around the edge of a platform such that the fall arrest assembly may provide protection for at least a portion of the perimeter of the platform.

Preferred and optional features defined above with respect to the fourth and fifth aspects may be independently or collectively used in combination with the fall arrest assembly according to the sixth aspect.

According to a seventh aspect of the present invention, there is provided a kit of parts to be assembled to form a fall arrest assembly, said kit comprising:
at least one body adapted to selectively engage a platform and comprising a mounting arrangement;
a clamping mechanism adapted to releasably secure the body against the platform;
a support post adapted to be mounted on the mounting arrangement; and
a catching assembly supported by the support post.

According to an eighth aspect of the present invention, there is provided a method of providing a fall arrest assembly adjacent a platform, said method comprising the steps of:
mounting a plurality of bodies against an edge surface of a platform, each body comprising a mounting arrangement;
clamping each body to the edge of the platform with a clamping mechanism;
mounting a support post on each mounting arrangement; and
securing a catching assembly to the support posts.

### BRIEF DESCRIPTION OF THE DRAWINGS

These and other aspects of the present invention will now be described, by way of example only, with reference to the accompanying drawings, in which:
Figure 1 is a plan view of a load platform of a vehicle incorporating a fall arrest assembly and components in accordance with an embodiment of aspects of the present invention;
Figure 2 is a perspective view of a bracket for engaging an edge of a load platform of a vehicle in accordance with an embodiment of the present invention:
Figure 3 is a side view of the bracket of Figure 2, shown in use;
Figure 4 is a diagrammatic representation of a support post shown initially in Figure 1:
Figures 5 and 6 show perspective and sectional views respectively of an end cap insert of the post of Figure 5;
Figure 7 is a perspective view of a bracket for engaging a corner edge region of a load platform of a vehicle in accordance with an embodiment of the present invention;
Figure 8 is a perspective view of a clamping plate for use with the bracket of Figure 7;
Figure 9 is an enlarged perspective view of the bracket of Figure 7;
Figure 10 is a perspective view of a bracket similar to that shown in Figure 7 and adapted for located at an opposing corner location of a load platform of a vehicle;
Figure 11 is a perspective view of a bracket for engaging an edge of a load platform of a vehicle in accordance with an alternative embodiment of the present invention:
Figure 12 is a side view of the bracket of Figure 11, shown in use;
Figure 13 is a perspective view of a portion of a pallet structure;
Figure 14 is a perspective view of a bracket for securing to the pallet of Figure 11 in accordance with an embodiment of an aspect of the present invention; and
Figure 15 is a side view of a bracket for securing to the pallet of Figure 11 in accordance with an alternative embodiment of an aspect of the present invention.

### DETAILED DESCRIPTION OF THE INVENTION

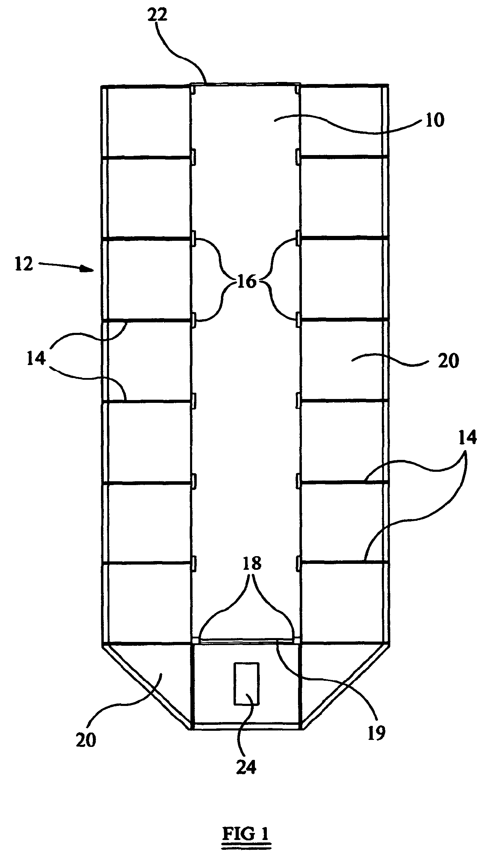

Reference is first made to Figure 1 of the drawings in which there is shown a plan view of a load platform of vehicle trailer 10 incorporating a fall arrest assembly 12 around the perimeter thereof, in accordance with an embodiment of the present invention. The assembly 12 comprises a plurality of support posts 14 extending outwardly from and secured to the platform 10 via brackets 16 positioned along the side edge portions of the trailer 10, and brackets 18 positioned at the rear corners of the trailer 10. The support posts 14 collectively support a net 20 for use in arresting the fall of an operator from the platform 10. It should be noted that the fall arrest assembly 12 is positioned around the side and trailing edges of the platform 10. However, in the embodiment shown protection at the leading edge of the platform 10 is not required due to the presence of a headboard 22 which is a common feature of such flatbed load platforms 10. However, where a headboard 22 is not present, the assembly 12 may extend around the entire perimeter of the trailer 10.

Each of the brackets 16, 18 are secured to the edge of the platform 10 by clamping thereto, as will be discussed in detail below. However, in the preferred embodiment shown, the corner brackets 18 are also secured to each other by a webbing strap 19 extending across the platform 10. A ratchet tensioner (not shown) is used to apply the required tension to the strap 19.

An access region 24 is provided within the net 20 at a trailing portion of the assembly 12 in order to provide access for personnel to climb on top of the platform 10. However, it should be noted that this access region is optional, and access may be provided by uncoupling portions of the net to gain access to the platform 10.

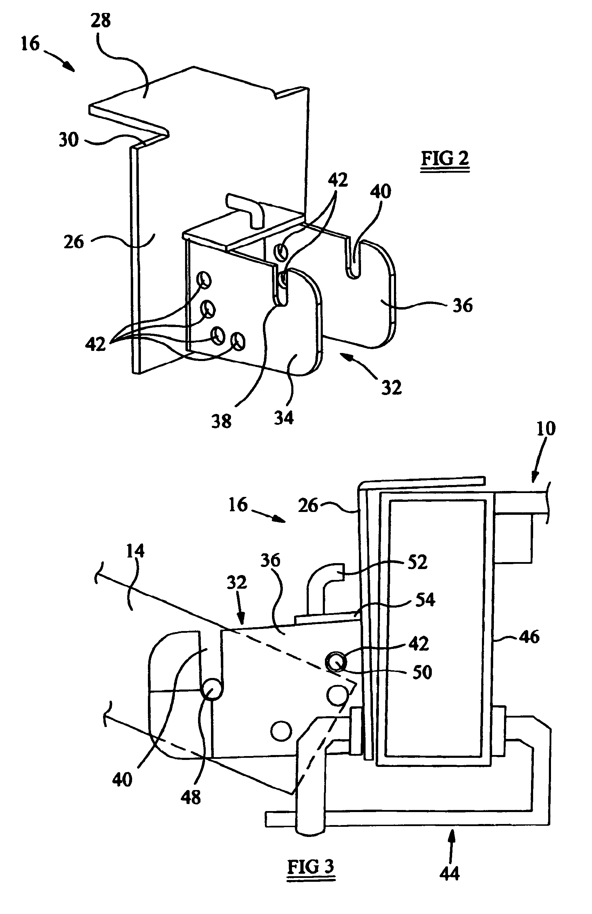

Reference is now made to Figure 2 of the drawings in which there is shown a perspective view of an edge bracket 16, in accordance with an embodiment of the present invention. The bracket 16 comprises a body having a first planar platform engaging portion 26 and a second planar platform engaging portion 28 extending substantially perpendicular from an upper edge region 30 of the first planar portion 26. In use, the first planar portion 26 engages a vertical edge surface of the platform 10, whereas the second planar portion engages a horizontal surface of the platform 10.

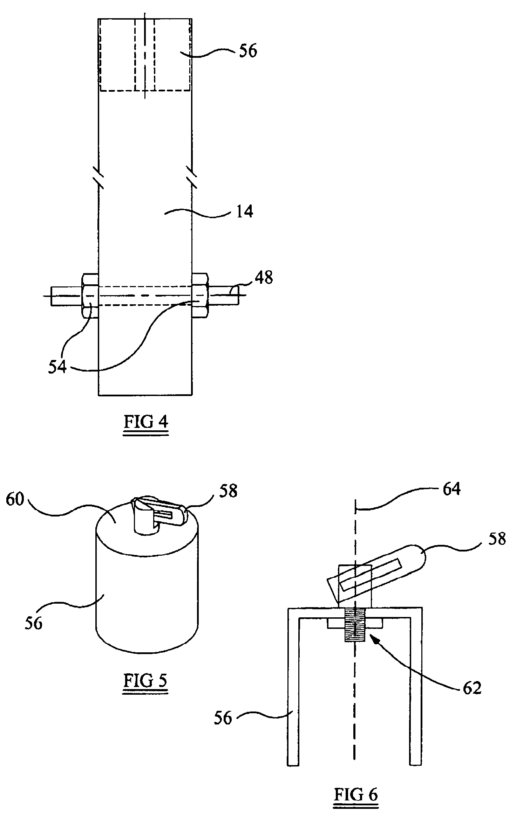

The bracket 16 further comprises a mounting arrangement, generally identified by reference numeral 32. Mounting arrangement 32 includes first and second plates 34, 36 aligned parallel to each other and extending substantially perpendicularly from the outer surface of a first planar portion 26. The first and second plates 34, 36 define a pair of mutually aligned slots 38, 40 which in use pivotally support a support post 14 (Figure 1) via a spindle, as will be discussed hereinbelow with reference to Figures 3 and 4. Referring still to Figure 2, each plate 34, 36 in the embodiment shown includes four pairs of mutually aligned apertures 42, the function of which will become apparent from the subsequent description.

Reference is now made to Figure 3 of the drawings in which the bracket 16 of Figures 1 and 2 is shown in use. A clamping mechanism 44 is used to clamp the bracket 16 against a box section member 46 of the platform. In the arrangement shown in Figure 3 the clamping mechanism 44 is positioned at a lower end of the first planar portion 26. However, this position is shown for the purposes of clarity and in a preferred arrangement the clamping mechanism 44 will preferably engage an upper portion of the planar portion 26. In the embodiment shown, the clamping mechanism 44 comprises a quick release clamp, and may be a lever clamp such as that provided by BESSEY. However, any other appropriate clamping mechanism may be utilised. The use of a clamping mechanism 44 in the present invention eliminates the requirement to use more complex fixing means, such as a bolting arrangement which would be time consuming to install and remove from the trailer platform 10. Additionally, use of the clamping mechanism 44 may eliminate the requirement to use fixing means which must span across the load platform 10. However, in certain embodiments and uses of the present invention it may be preferred to use such fixing means.

A support arm 14 is shown in Figure 3 mounted on the mounting arrangement 32 via a spindle 48 which extends laterally through the support post 14 at the lower end region thereof, wherein the spindle is received within the slots 38, 40 of the respective plates 34, 36. A pin 50 is positioned within the uppermost pair of holes 42 such that an end region of the post 14 abuts against said pin 50 to restrict the pivoting movement of the post 14 in a downwardly direction. Location of the pin 50 in alternate pairs of holes 42 permits the angle at which the posts 14 extends from the bracket 16 to be readily adjusted.

In the preferred embodiment shown, the pin 50 is deformable, such that in the event of a fall, downward pivoting motion of the post 14 will cause the pin 50 to be deformed, and thus assist to absorb the energy from the fall.

A hook 52 is mounted on the mounting arrangement 32 via a plate 54, wherein the hook 52 is engaged by an inner side of the net 20 (Figure 1), to assist to maintain the net 20 in place.

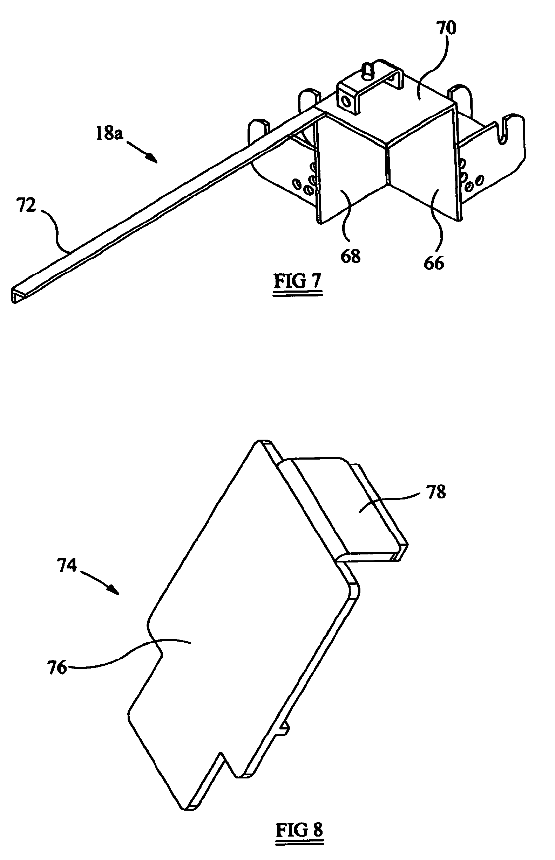

Reference is now made to Figure 4 of the drawings in which there is shown a diagrammatic representation of a post 14. The post 14 in the embodiment shown is circular in cross-section and may be approximately two metres in length. The transverse spindle 48 is secured to lower edge region of the post 14 via suitable nuts 54. An insert 56 is provided in an outermost end of the post 14, wherein the insert 56 is for use in securing the net 20 (Figure 2) to the post 14. A perspective view of the insert 56 is shown in Figure 5 of the drawings, which shows a toggle 58 secured to an upper face 60 thereof. As shown in the cross-sectional view of the insert 56 in Figure 6, the toggle 58 is secured via a threaded nut and bolt arrangement 62. In use, the toggle 58 is aligned with a longitudinal axis 64 of the insert 56 to be inserted through an eyelet formed in the net 20 (Figure 1). Once inserted, the toggle 58 may be collapsed to retain the net 20 in place.

The form of the corner brackets 18 shown in Figure 1 will now be described with reference to Figures 7 to 10. Referring initially to Figure 7, the bracket shown, generally identified by reference numeral 18a, is for use on the trailing right hand corner of the platform 10. The bracket 18a comprises first and second planar members 66, 68 which in use are intended to be aligned in a vertical plane. The first and second members 66, 68 are joined at respective edges thereof and extend generally perpendicularly relative to each other. A third planar member 70 is secured to the upper edges of members 66, 68 and extend generally perpendicular therefrom. In use, members 66, 68 are intended to engage a side surface of the platform 10, whereas member 70 is intended to engage an upper surface of said platform. An elongate angled member 72 extends from a corner formed between members 68, 70, and in use the elongate member 72 engages a corner edge of the platform 10. A clamping plate, shown in Figure 8 and identified generally by reference numeral 74, is used in combination with the elongate member 72 to clamp bracket 18a to the platform 10. The clamping plate 74 incorporates a based plate 76 and a hook member 78 extending generally perpendicularly from an upper edge of the base plate 74. In use, the clamping plate 74 is hooked over the elongate member 72, and a clamping mechanism, such as mechanism 44 shown in Figure 3, is used to clamp the base plate 76 against the elongate member, and thus the platform.

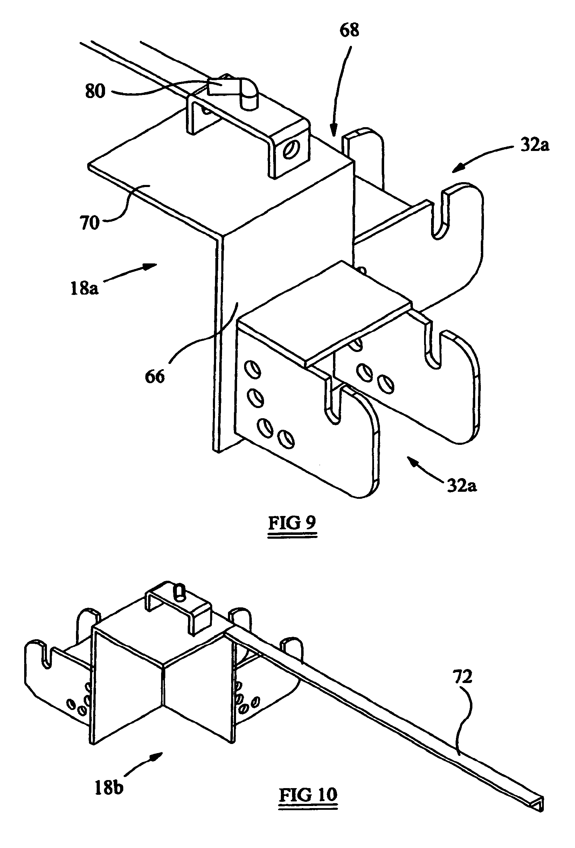

Reference is now made to Figure 9 of the drawings in which is shown a large perspective view, from an alternative angle, of the bracket 18a shown in Figure 7. Two identical mounting arrangements, generally identified by reference numeral 32a are provided on bracket 18a, a first mounting arrangement secured to member 66, and a second mounting arrangement secured to the second member 68. The mounting arrangements 32a are generally identical to arrangement 32 shown in Figures 2 and 3, and as such no further description will be given.

Mounted on an upper surface of the third member 78 of bracket 18a is a hook 80 to which a portion of the net 20 (Figure 1) may be attached.

An alternative bracket 18b is shown in Figure 10, wherein the bracket 18b is identical to bracket 18a shown in Figures 7 and 9, with the exception that an elongate member 72 extends in an alternative direction to allow the bracket 18b to be used on an opposing corner of the trailer 10.

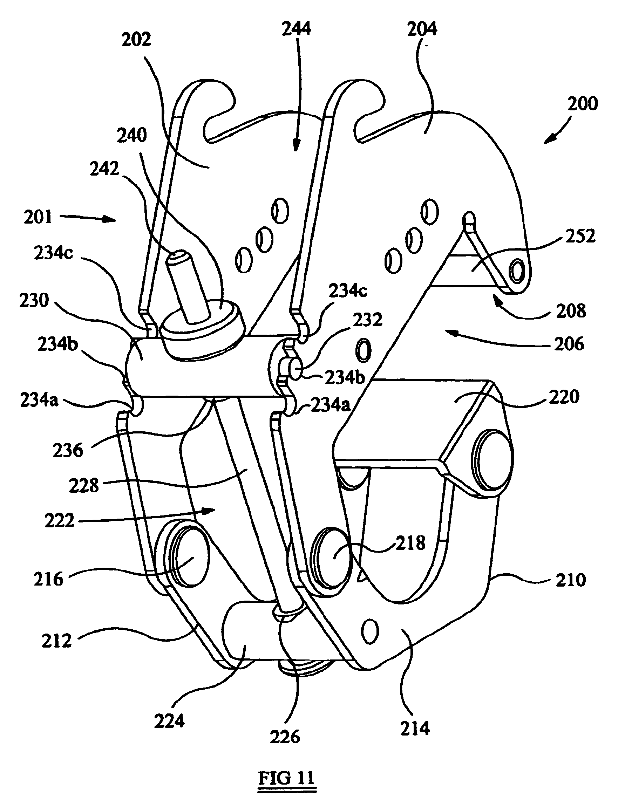

Reference is now made to Figure 11 of the drawings in which there is shown a perspective view from below of a bracket, generally identified by reference numeral 200, in accordance with an alternative embodiment of the present invention. The bracket 200 may be used in the fall arrest assembly 12 shown in Figure 1.

The bracket 200 comprises a body portion 201 having a pair of aligned and identical plates 202, 204, wherein the edge regions of the plates 202, 204 in use engage a platform (not shown in Figure 11). The plates 202, 204 collectively define a first platform engaging portion 206 and a second platform engaging portion 208 aligned generally perpendicularly with the first portion 206.

A clamping arm 210 comprising a pair of plates 212, 214 is pivotally mounted on the body of the bracket via respective pivot connections 216, 218. A pressure plate 220 is pivotally mounted on the free end of the clamping arm 210, wherein the pressure plate is adapted to engage a surface of a platform.

A force mechanism 222 extends between the clamping arm 210 and the body 201 and in use is adapted to adjust the relative pivotal position of the body 201 and clamping arm 210 to thus adjust the applied clamping force. Specifically, a fixed bar 224 extends between the plates 212, 214 of the clamping arm, wherein the bar 224 defines a lateral throughbore 226 adapted to receive an adjusting rod 228. An adjustable bar 230 is mounted between the plates 202, 204 of the body 201, wherein the adjustable bar 230 has a pair of bosses 232 (only one visible) which may be received in one of three pairs of adjusting slots 234a, 234b, 234c in each plate 202, 204. The adjustable bar 230 also defines a throughbore 236 adapted to receive the adjusting rod 228. A nut 240 is threadably mounted on an end 242 of the adjusting rod 228, wherein rotation of the nut in a first direction applies a force between the bars 224, 230 to thus apply a clamping force between the body 201 and clamping arm 210, and rotation of the nut in a second, opposite direction releases said force.

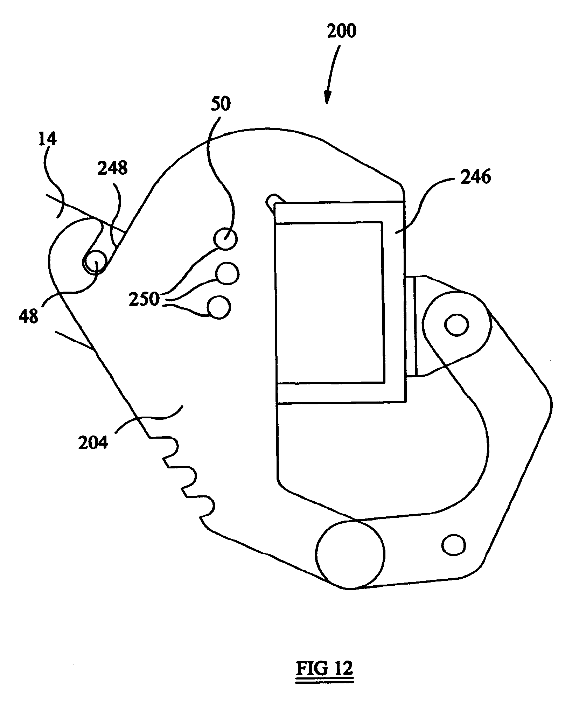

The bracket 200 incorporates a mounting arrangement, generally identified by reference numeral 244. It should be noted that mounting arrangement 244 is similar to the mounting arrangement in the embodiment shown in Figures2 and 3. However, for completeness, a further description of the present arrangement will be given below, with reference to Figure 12 in which the bracket 200 is shown clamped against an elongate member 246, namely a tirsan, of a trailer platform. It should be noted that the clamping force mechanism 222 is not shown for the purposes of clarity.

The mounting arrangement 244 is formed in each of the plates 202, 204 (only plate 204 is visible in Figure 12). In this respect, each plate comprises a slotted portion 248 adapted to receive and support end regions of a spindle 48 of a support post 14. In the arrangement shown, three pairs of mutually aligned apertures 250 are provided in the plates 202, 204, wherein the apertures 250 are adapted to receive and permit adjustment of a pin 50 which in use restricts the pivoting motion of the post 14.

In use, the bracket 200 may be secured to a platform independently of any other identical, similar or dissimilar bracket. However, in some uses, the bracket 200 may be secured to another bracket in a fall arrest assembly, for example via an elongate member such as webbing or the like. To permit such use, the bracket 200 comprises an attachment point 252, shown in Figure 11, wherein the attachment point 252 comprises a bar extending between the plates 202, 204 of the body 201.

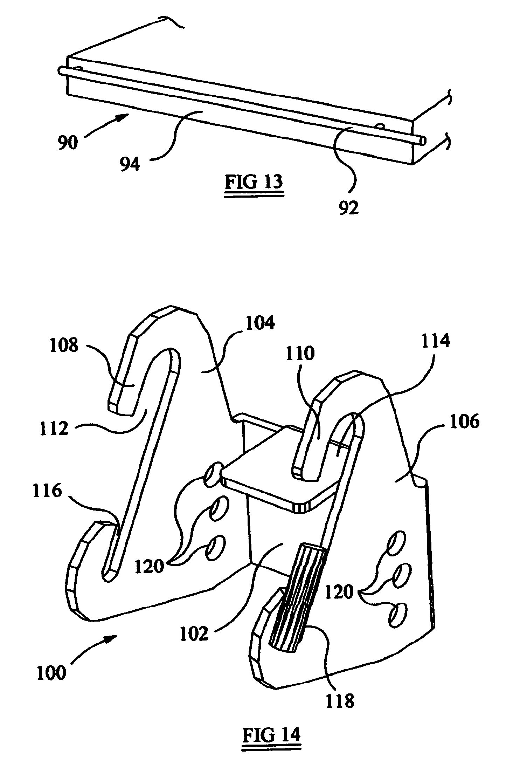

Reference is now made to Figure 13 of the drawings in which there is shown a partial view of a pallet, generally identified by reference numeral 90, wherein the pallet 90 incorporates an elongate bar 92 extending along an edge surface 94 thereof. The pallet 90 may be utilised to support a load, such that the pallet and load may be directly positioned on a load platform of a vehicle, such as load platform 10 shown in Figure 1.

A bracket for use in attaching to the pallet 90 to secure appropriate posts and a catching net thereto is shown in Figure 14, reference to which is now made. The bracket, generally identified by reference numeral 100, comprises a base plate 102 and two side plates 104, 106 extending generally perpendicularly from opposing edges of the base plate 102. Each of the side plates, 104, 106 includes a hook component 108, 110 defined by respective upper slots 112, 114.

In use, the bracket 100 may be hooked over the elongate bar 92 of the pallet 90, such that the base plate 102 rests against edge portion 94 of the pallet. Once in position, appropriate support posts, such as support posts 14, may be secured to a respective bracket 100 via a suitable mounting arrangement, which will now be described. Each of the side plates 104, 106 further defines lower slots 116, 118 which in use receive a spindle of a support post, such as the spindle 48 of the post 14 shown in Figures 3 and 4. The side plates 104, 106 in the embodiment shown comprise three pairs of mutually aligned holes 120 for receiving a pin (not shown) at the required height in order to prevent downward pivoting motion of a support post, in similar manner to that described above with reference to Figure 3.

Bracket 100 permits a fall arrest assembly to be established around the perimeter of a pallet, such as that pallet 90 shown in Figure 11, without the requirement to utilise the clamping arrangement in the assembly of Figure 1.

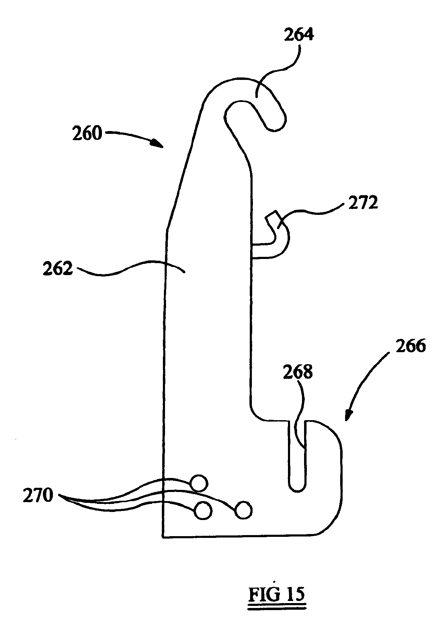

An alternative arrangement of a bracket for securing to a pallet 90 of the type shown in Figure 13 is shown in Figure 15, reference to which is now made. The bracket, generally identified by reference numeral 260, is shown from one side. The bracket 260 is similar to that bracket 100 shown in Figure 14 in that it comprises a pair of plates 262 (only one shown) which define respective hook portions 264 to engage the elongate bar 92 of the pallet (Figure 13). A mounting arrangement 266 is defined by a pair of slots 268 (only one shown) which support a spindle of a support post, such as spindle 48 of the support post 14 first shown in Figure 3. Three holes 270 are provided in each plate 262 which in use support a pin (not shown) which restricts the pivoting motion of a supported post.

The bracket 260 further comprises a hook 272 mounted on a plate support (not shown) which extends between the plates 262, wherein, in use, the hook provides an attachment point for a catching net, such as net 20 shown in Figure 1.

It should be understood that the embodiments described above are merely exemplary of the present invention that that various modifications were made thereto without departing from the scope of the invention. For example, the clamping arrangement 44 shown in Figure 3 may be fixed to the bracket 16, and as such form a integral part thereof. Additionally, the mounting arrangement 32 may alternative or additionally be mounted on the second planar portion 28 of the bracket 16. Furthermore, the brackets may be adapted to accommodate a profiled portion, such as lugs, pins or the like associated with the platform.

## Claims

1. An apparatus for securing to a platform, said apparatus comprising:
a body adapted to engage the platform and comprising a mounting arrangement for supporting a catching assembly; and
a clamping mechanism adapted to releasably secure the body against the platform.

2. The apparatus of claim 1, wherein the body is adapted to engage an edge region of a platform such that the catching assembly may be positioned at least partially around the perimeter of said platform.

3. The apparatus of claim 1 or 2, adapted to be secured to a load platform of a vehicle.

4. The apparatus of any preceding claim, wherein the body comprises at least one platform engaging portion adapted to engage a side surface of a platform.

5. The apparatus of claim 4, wherein the clamping mechanism is adapted to clamp the at least one platform engaging portion against the platform.

6. The apparatus of any preceding claim, wherein the body comprises first and second platform engaging portions.

7. The apparatus of claim 4, 5 or 6, wherein the first platform engaging portion comprises at least one substantially planar member.

8. The apparatus of claim 7, wherein a face surface of the planar member is adapted to engage the platform.

9. The apparatus of claim 7, wherein an edge surface of the planar member is adapted to engage the platform.

10. The apparatus of claim 9, wherein the first platform engaging portion comprises a pair of substantially planar members aligned parallel to each other, wherein an edge surface of each member is adapted to engage the platform.

11. The apparatus of claim 10, wherein the edge surface of one or both members is adapted to directly or indirectly engage the platform

12. The apparatus of claim 10 or 11, wherein a portion of the clamping mechanism is adapted to engage at least one planar member of the first platform engaging portion.

13. The apparatus of any one of claims 6 to 12, wherein the second platform engaging portion comprises at least one substantially planar member.

14. The apparatus of any preceding claim, adapted to be secured to a platform comprising an elongate edge support member, wherein the body is adapted to engage said elongate member.

15. The apparatus of claim 14, wherein the clamping mechanism is adapted to engage the body and a surface of the elongate member such that the clamping mechanism may apply a clamping force therebetween.

16. The apparatus of any preceding claim, wherein the clamping mechanism is separable from the body.

17. The apparatus of any one of claims 1 to 15, wherein the clamping mechanism is secured to the body.

18. The apparatus of any preceding claim, wherein the clamping mechanism comprises a force mechanism adapted to apply a clamping force between the body and a platform to which the apparatus is to be secured.

19. The apparatus of claim 18, wherein the force mechanism is adapted to apply a clamping force against the body by a screw arrangement.

20. The apparatus of claim 18, wherein the force mechanism comprises a lever arrangement.

21. The apparatus of claim 18, 19 or 20, wherein the force mechanism is of a quick-release type.

22. The apparatus of any preceding claim, wherein the clamping mechanism comprises first and second clamping arms supporting respective pressure plates adapted to engage a respective one of the body and a platform.

23. The apparatus of any preceding claim, wherein the clamping mechanism comprises a quick-adjust arrangement.

24. The apparatus of any preceding claim, wherein the clamping mechanism comprises a clamping arm pivotally connected to the body, wherein the clamping arm comprises a platform engaging portion adapted to engage a surface of the platform.

25. The apparatus of claim 24 when dependent on any one of claims 18 to 23, wherein the force mechanism extends between the clamping arm and the body, wherein the force mechanism is adapted to adjust the relative pivotal movement of the arm and body.

26. The apparatus of claim 24 or 25, when dependent on any one of claims 18 to 23, wherein the body comprises a pair of substantially planar members aligned parallel to each other, wherein the force mechanism is adapted to engage both members.

27. The apparatus of any preceding claim, wherein the mounting arrangement comprises a mounting bracket upon which a support arm is mounted.

28. The apparatus of claim 27, wherein the support post to be mounted on the mounting bracket comprises a spindle extending laterally through one end region thereof, wherein the mounting bracket is adapted to pivotally support said spindle.

29. The apparatus of claim 27 or 28, wherein the mounting bracket is separately formed and subsequently secured to the body.

30. The apparatus of claim 27 or 28, wherein the mounting bracket is integrally formed with the body.

31. The apparatus of any one of claims 27 to 30, wherein the mounting bracket comprises first and second plates each defining a fulcrum adapted to receive and support an end region of a spindle of a support post.

32. The apparatus of any preceding claim, wherein the mounting arrangement comprises abutment means against which a lower end of a support post abuts to limit pivoting motion of a post relative to the body.

33. The apparatus of claim 32, wherein the abutment means comprises an abutment member extending between the first and second plates.

34. The apparatus of claim 32 or 33, wherein the abutment means is adjustable to permit the angle at which a support post extends from the body to be adjusted.

35. The apparatus of any preceding claim, further comprising dampening means for dampening the force of a fall onto a supported catching part when the apparatus is in use.

36. The apparatus of any one of claims 6 to 35, wherein the body comprises a third platform engaging portion, wherein said third portion is aligned substantially perpendicular relative to the first and second portions.

37. The apparatus of any preceding claim, adapted to engage a similar apparatus, when in use.

38. The apparatus of any preceding claim, wherein the apparatus may be adapted to engage a profile on a platform to which the apparatus is to be secured.

39. The apparatus of any preceding claim, further comprising a support post adapted to be mounted on the mounting arrangement and a catching assembly supported by the support post.

40. An apparatus for securing against an edge surface of a platform, said apparatus comprising:
a hook arrangement adapted to engage an elongate member positioned
a platform engaging portion adapted to engage an edge surface of a platform; and
a mounting arrangement for supporting a catching assembly.

41. The apparatus of claim 40, wherein, in use, the apparatus may be located over the elongate member via the hook arrangement such that the platform engaging portion engages an edge surface of an adjacent platform, wherein the apparatus may then be utilised to support a catching assembly to provide a safety fall arrest barrier for arresting a fall of a person or object from the platform.

42. The apparatus of claim 40 or 41, wherein the hook arrangement is adapted to engage an elongate member secured to an edge surface of a platform.

43. The apparatus of claim 40, 41 or 42, further comprising a base member forming the platform engaging part, and first and second parallel plate members extending substantially perpendicularly from the base member.

44. The apparatus of claim 43, wherein each of the first and second plates defines a slot which together define the hook arrangement.

45. The apparatus of any one of claims 40 to 44, wherein the mounting arrangement is adapted to receive and mount a support post of a catching assembly.

46. The apparatus of any one of claims 40 to 45, wherein the mounting arrangement comprises a mounting bracket upon which a support arm is pivotally mounted via a spindle.

47. The apparatus of claim 46 when dependent on any one of claims 43 to 45, wherein the first and second plate members define respective mutually aligned apertures adapted to receive an end region of a spindle of a support post.

48. The apparatus of any one of any one of claims 40 to 47, wherein the mounting arrangement comprises an abutment member extending between the first and second plate members.

49. The apparatus of any one of claims 40 to 48, further comprising a support post for supporting a catching assembly and adapted to be mounted on the mounting arrangement.

50. A kit of parts to be assembled to form a fall arrest assembly, said kit comprising:
at least one body adapted to selectively engage a platform and comprising a mounting arrangement;
a clamping mechanism adapted to releasably secure the body against the platform;
a support post adapted to be mounted on the mounting arrangement; and
a catching assembly supported by the support post.

51. A method of providing a fall arrest assembly adjacent a platform, said method comprising the steps of:
mounting a plurality of bodies against an edge surface of a platform, each body comprising a mounting arrangement;
clamping each body to the edge of the platform with a clamping mechanism;
mounting a support post on each mounting arrangement; and
securing a catching assembly to the support posts.
